# EUROPEAN PATENT APPLICATION

(11) **EP 2 634 511 A1**
(43) Date of publication of application: **04.09.2013**
(21) Application number: 10858972.2
(22) Date of filing: 29.10.2010
(51) Int. Cl.: F25B 21/00

(54) **HEAT EXCHANGER AND MAGNETIC REFRIGERATION SYSTEM**

(71) Applicant: Kabushiki Kaisha Toshiba, Minato-ku Tokyo 105-8001 (JP)
(72) Inventor: SAITO, Akiko, Tokyo 105-8001 (JP); KOBAYASHI, Tadahiko, Tokyo 105-8001 (JP); KAJI, Shiori, Tokyo 105-8001 (JP)
(74) Representative: Joly, Jean-Jacques
(86) International application number: PCT/JP2010/069376
(87) International publication number: WO 2012/056585

(57) **Abstract**

According to an embodiment of the invention, a heat exchanger comprises: a container to be fed with a heat transport medium; and a plurality of heat exchange components provided with a prescribed spacing inside the container.. The plurality of heat exchange components are provided along a flowing direction of the heat transport medium so as not to overlap at least partly as viewed in the flowing direction of the heat transport medium.

## Description

### [Technical Field]

This invention relates to a heat exchanger and a magnetic refrigeration system.

### [Background Art]

Recently, as an environment-conscious and efficient refrigeration technology, the magnetic refrigeration technology in which a magnetic refrigeration cycle is configured using the magnetocaloric effect to produce a high temperature section and a low temperature section has been raising expectations and activating research and development intended for room temperature region.
As one of such magnetic refrigeration technologies, the refrigeration technology called the AMR (active magnetic regenerative refrigeration) technique is proposed, in which the magnetic refrigeration operation using the magnetocaloric effect is performed by a heat exchange component including a magnetocaloric effect material, and simultaneously, the heat storage effect storing the cold heat generated by this magnetic refrigeration operation in that component is performed.
The AMR technique can achieve a higher heat exchange efficiency than the gas refrigeration technology using the gas compression-expansion cycle.
However, from the viewpoint of energy saving and the like, further improvement in heat exchange efficiency has been desired.

### [Citation List]

### [Patent Literature]

[PTL1]
   JP 2002-356748 A (Kokai)
[PTL2]
   JP 2007-155237 A (Kokai)

### [Summary of Invention]

### [Technical Problem]

The embodiment of the invention is to provide a heat exchanger and a magnetic refrigeration system that can improve a heat exchange efficiency.

### [Solution to Problem]

According to an embodiment, there is provided a heat exchanger comprising: a container to be fed with a heat transport medium; and a plurality of heat exchange components provided with a prescribed spacing inside the container, the plurality of heat exchange components being provided along a flowing direction of the heat transport medium so as not to overlap at least partly as viewed in the flowing direction of the heat transport medium.

### [Brief Description of Drawings]

[Fig. 1]

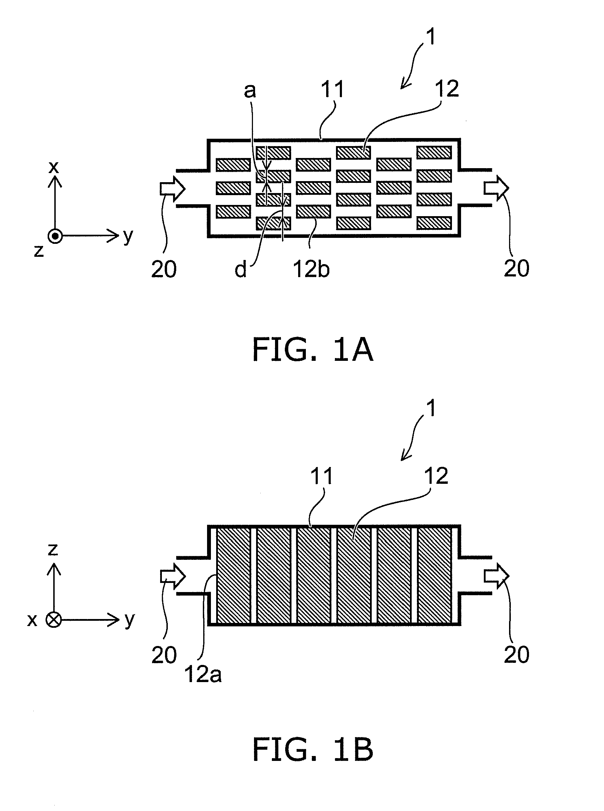

   FIGS. 1A and 1B are schematic sectional views for illustrating a heat exchanger according to a first embodiment.
[Fig. 2]

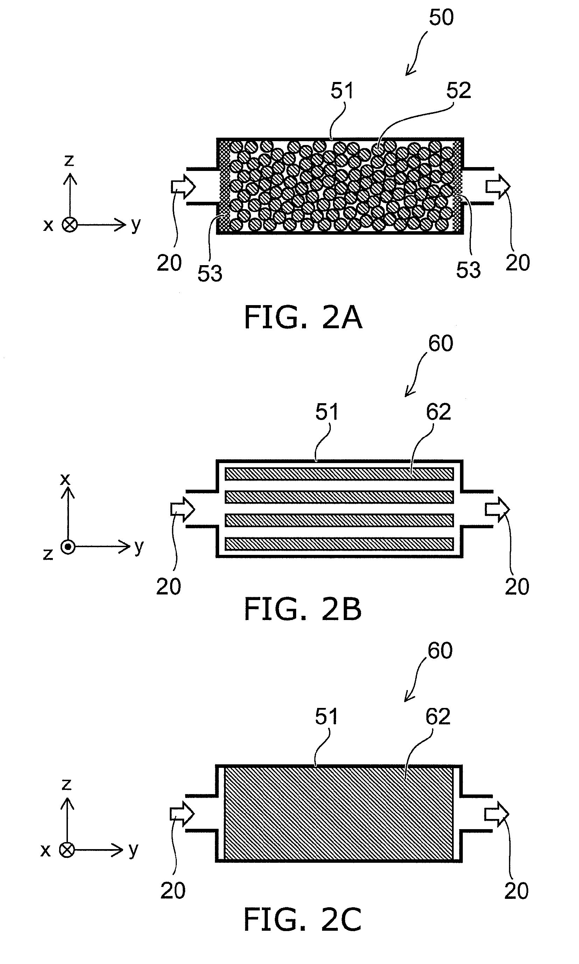

   FIGS. 2A to 2C are schematic sectional views for illustrating heat exchangers according to comparative examples, FIG. 2A is a schematic sectional view of a heat exchanger provided with spherical heat exchange components including a magnetocaloric effect material, FIGS. 2B and 2C are schematic sectional views of a heat exchanger provided with plate-like heat exchange components including a magnetocaloric effect material.
[Fig. 3]

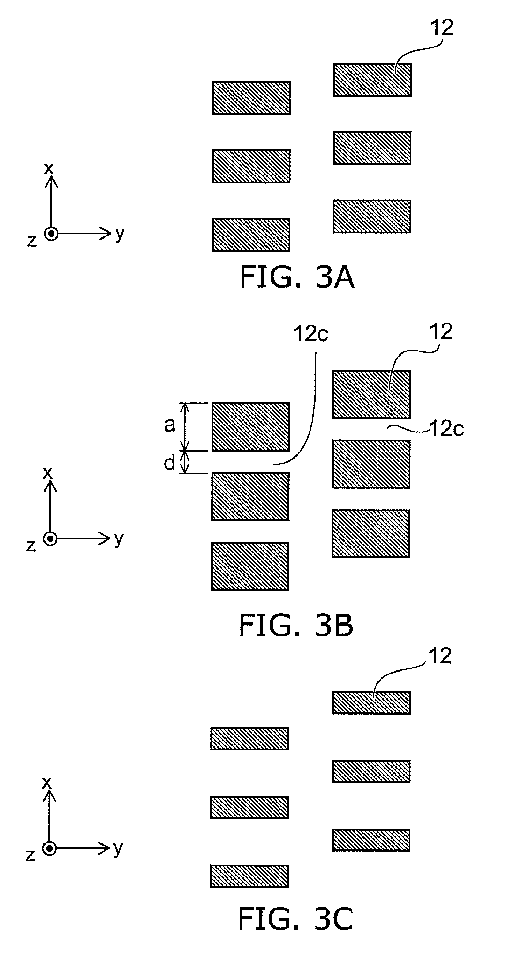

   FIGS. 3A to 3C are schematic sectional views for illustrating the arrangement of heat exchange components.
[Fig. 4]

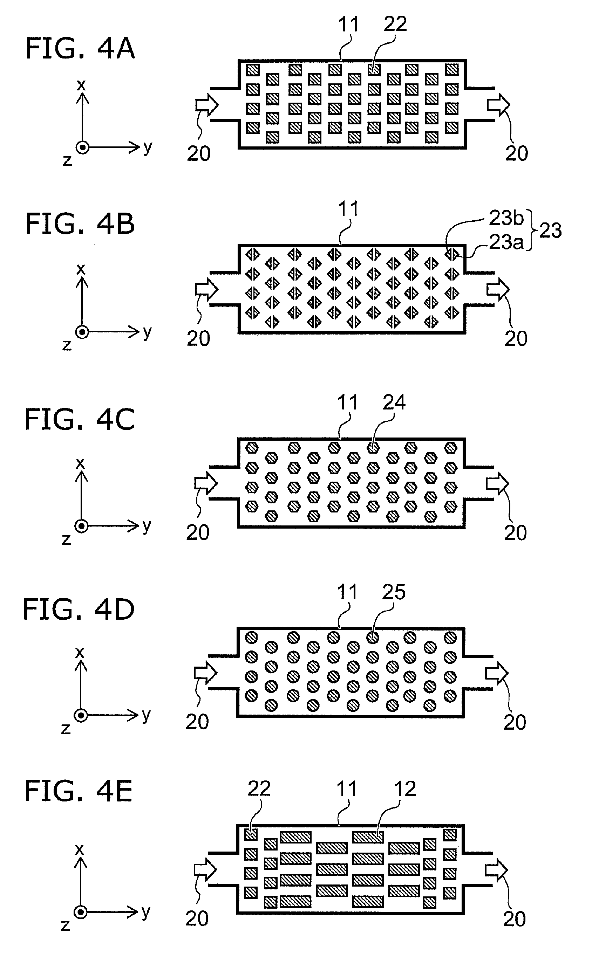

   FIGS. 4A to 4E are schematic sectional views for illustrating the cross-sectional shape in the plane parallel to the xy plane of the heat exchange component.
[Fig. 5]

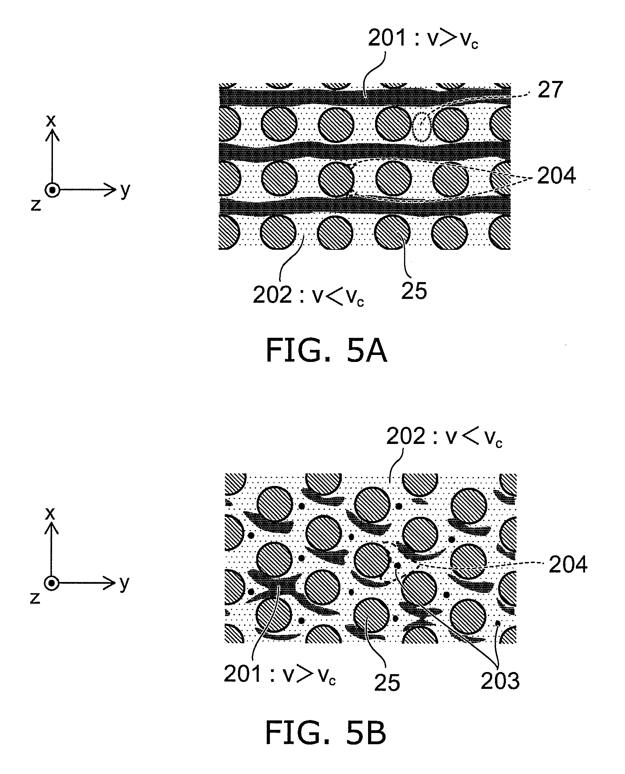

   FIGS. 5A and 5B are schematic views for illustrating the turbulent state occurring in the flow of the heat transport medium 20, FIG. 5A shows the case where the heat exchange components 25 having a circular cross-sectional shape are arranged in a regular lattice, FIG. 5B shows the case where the heat exchange components 25 having a circular cross-sectional shape are arranged in a staggered lattice.
[Fig. 6]

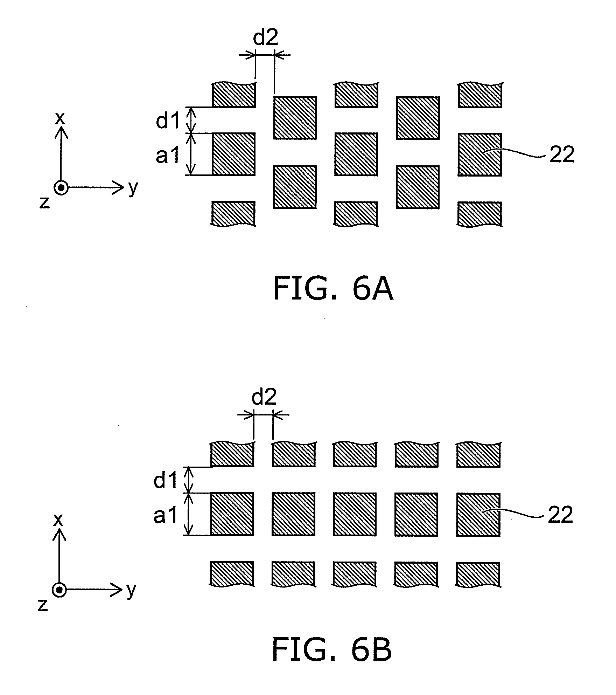

   FIGS. 6A and 6B are schematic views for illustrating the arrangement configuration of the heat exchange components, FIG. 6A is a schematic view for illustrating an example (practical example 1) of the arrangement configuration of the heat exchange components according to this embodiment, FIG. 6B is a schematic view for illustrating an arrangement configuration of the heat exchange components according to comparative example 1.
[Fig. 7]

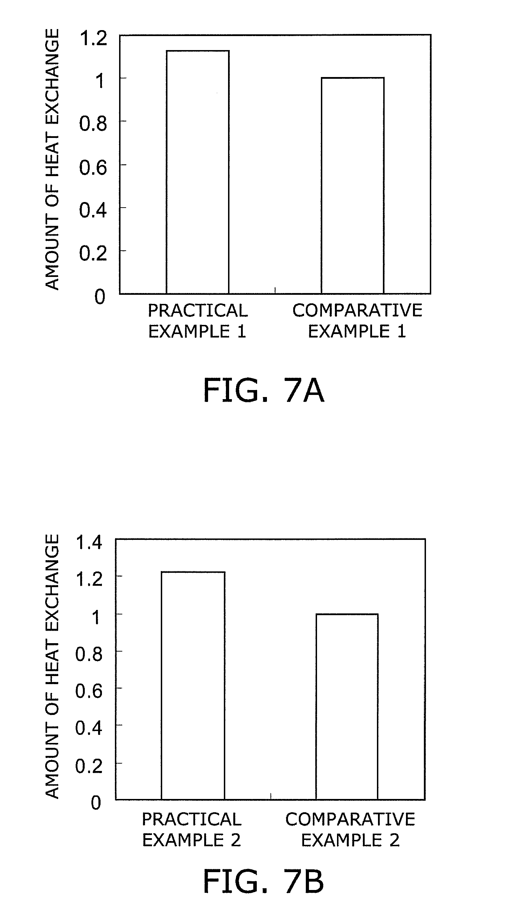

   FIGS. 7A and 7B are graphs for illustrating the comparison between the amount of heat exchange of the practical example and the amount of heat exchange of the comparative example, FIG. 7A is a graph for illustrating the comparison between the amount of heat exchange of practical example 1 and the amount of heat exchange of comparative example 1, FIG. 7B is a graph for illustrating the comparison between the amount of heat exchange of practical example 2 and the amount of heat exchange of comparative example 2.
[Fig. 8]

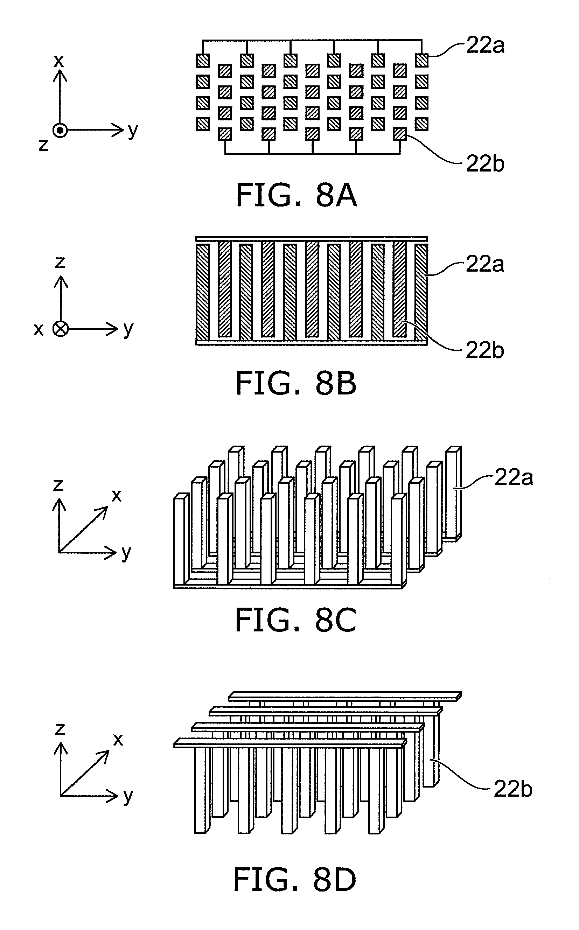

   FIGS. 8A to 8D are schematic views for illustrating a method for arranging the heat exchange components.
[Fig. 9]

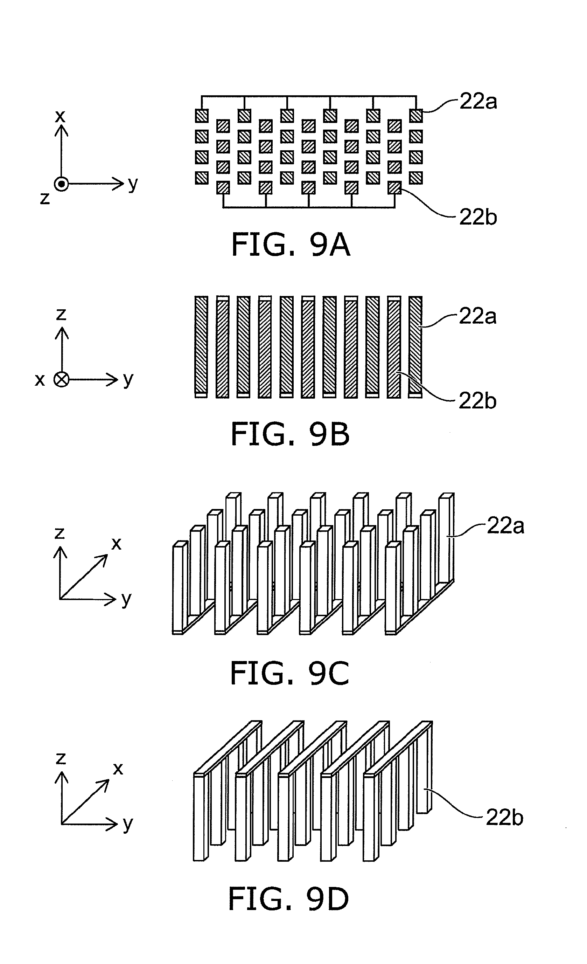

   FIGS. 9A to 9D are also schematic views for illustrating a method for arranging the heat exchange components.
[Fig. 10]

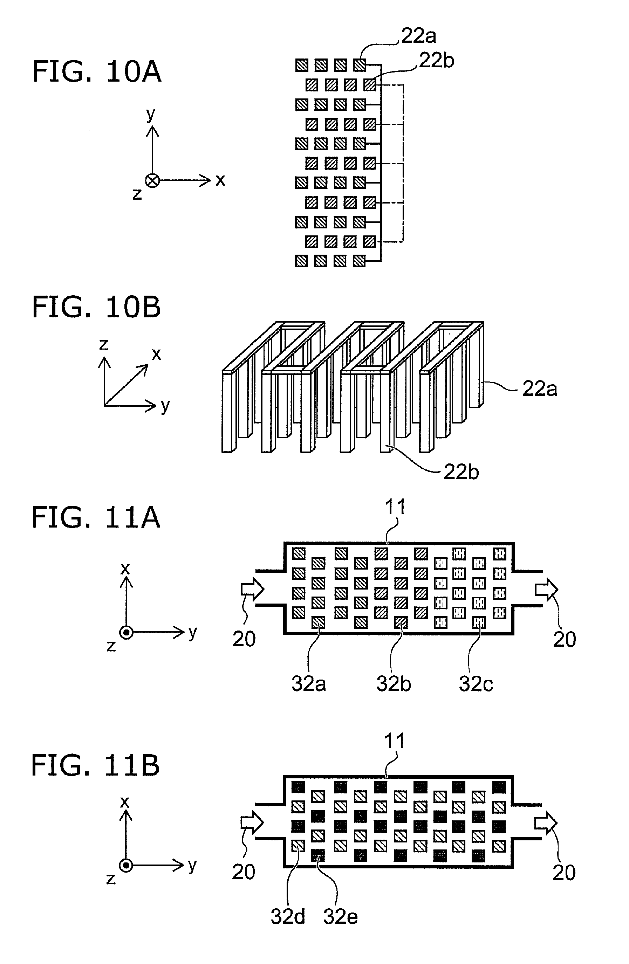

   FIGS. 10A and 10B are also schematic views for illustrating a method for arranging the heat exchange components.
[Fig. 11]
   FIGS. 11A and 11B are schematic sectional views for illustrating cases of arranging heat exchange components formed from different magnetocaloric effect materials, FIG. 11A shows the case of arranging groups of heat exchange components formed from different magnetocaloric effect materials along the y direction, FIG. 11B shows the case of arranging heat exchange components formed from magnetocaloric effect materials having different Curie temperatures Tc in a mixed manner.
[Fig. 12]

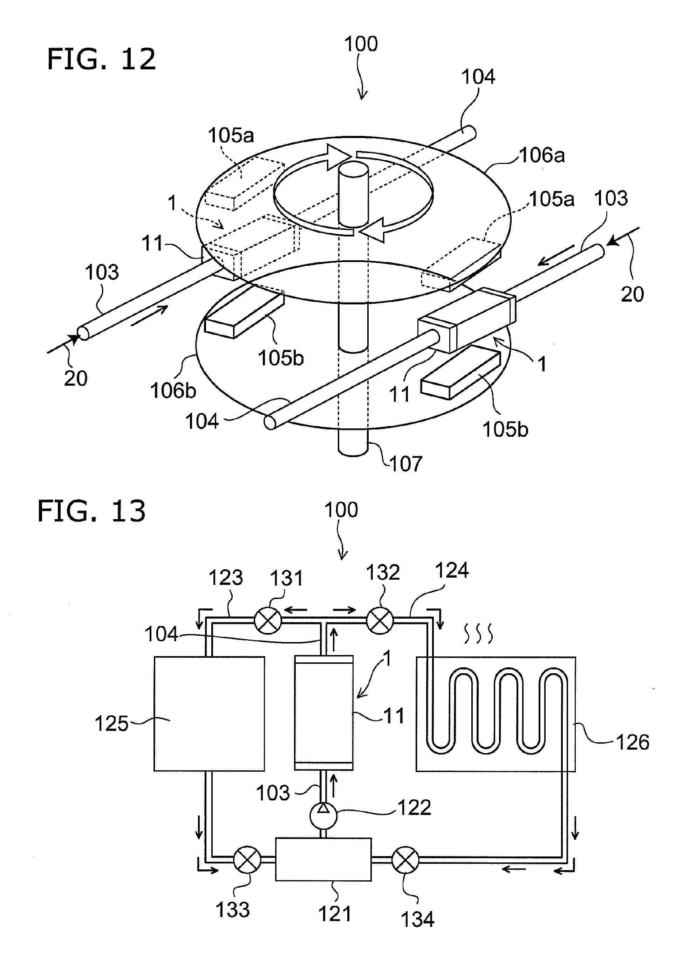

   FIG. 12 is a schematic configuration view for illustrating a magnetic refrigeration system according to a second embodiment.
[Fig. 13]
   FIG. 13 is a schematic line diagram of the magnetic refrigeration system according to the second embodiment.

### [Description of Embodiments]

Embodiments will now be illustrated with reference to the drawings. In the drawings, similar components are labeled with like reference numerals, and the detailed description thereof is omitted appropriately.
In the drawings, arrows x, y, and z indicate three directions (axes) orthogonal to each other. The z direction is taken as the direction of magnetic field.
The flowing direction of the heat transport medium 20 may be directed in the y direction or the direction opposite to the y direction during the operation of the magnetic refrigeration system. As an example, the case of the heat transport medium 20 flowing in the y direction will be illustrated.

### [First embodiment]

FIGS. 1A and 1B are schematic sectional views for illustrating a heat exchanger according to a first embodiment. FIGS. 2A to 2C are schematic sectional views for illustrating heat exchangers according to comparative examples. Here, FIG. 2A is a schematic sectional view of a heat exchanger provided with spherical heat exchange components including a magnetocaloric effect material. FIGS. 2B and 2C are schematic sectional views of a heat exchanger provided with plate-like heat exchange components including a magnetocaloric effect material.
FIGS. 3A to 3C are schematic sectional views for illustrating the arrangement of heat exchange components.
First, heat exchangers according to comparative examples are illustrated.
FIG. 2A is a schematic sectional view for illustrating a heat exchanger according to a first comparative example.
As shown in FIG. 2A, the heat exchanger (ARM bed) 50 includes a container 51, heat exchange components 52, and a partition 53.
The container 51 is configured as a tube having a rectangular cross-sectional shape as viewed in the y direction.
The heat exchange component 52 has a spherical shape and is configured to include a magnetocaloric effect material such as Gd (gadolinium). The heat exchange components 52 are packed inside the container 51 with a packing ratio of 60% or more.

The partition 53 is shaped like a mesh and provided near both end portions of the container 51. The mesh size of the partition 53 is made smaller than the size of the heat exchange component 52 so as to prevent the heat exchange component 52 from dropping out of the container 51. The heat exchanger 50 is configured so that a heat transport medium 20 is fed into the container 51 through one partition 53, and the fed heat transport medium 20 is ejected out of the container 51 through the other partition 53. The feed and ejection of the heat transport medium 20 to the container 51 from one direction, and the feed and ejection of the heat transport medium 20 to the container 51 from the opposite direction, constitute one magnetic refrigeration cycle.

Here, if the particle diameter of the heat exchange component 52 is made small, the heat exchange components 52 can be packed inside the container 51 with a high packing ratio and a large surface area. In this case, as the packing ratio becomes higher, the amount of heat generated by the magnetic refrigeration work becomes larger. As the surface area becomes larger, the generated heat can be passed (heat-exchanged) more efficiently to the heat transport medium 20.

However, in the case where the frequency of the magnetic refrigeration cycle is made higher (the number of magnetic refrigeration cycles per unit time is increased) to increase the refrigeration power, the pressure loss of the heat transport medium 20 is increased with the increase of the frequency. This may decrease the refrigeration performance, or hamper the operation of the magnetic refrigeration system including the heat exchanger 50.

More specifically, in the heat exchanger 50 packed with spherical heat exchange components 52, in the case where the particle diameter is small, the pressure loss is increased with the increase of the frequency. This may make difficult the operation of the magnetic refrigeration system including the heat exchanger 50. On the other hand, in the case where the particle diameter is large, the pressure loss can be reduced. However, due to the decrease of the surface area, the heat exchange efficiency decreases and may incur the decrease of the refrigeration performance.

FIGS. 2B and 2C are schematic sectional views for illustrating a heat exchanger according to a second comparative example.
As shown in FIGS. 2B and 2C, the heat exchanger (ARM bed) 60 includes a container 51 and heat exchange components 62.
The heat exchange component 62 has a plate-like shape and is configured to include a magnetocaloric effect material such as Gd (gadolinium). The heat exchange components 62 are provided in a plurality inside the container 51. The space between the heat exchange components 62 and between the heat exchange component 62 and the inner wall of the container 51 constitutes the channel of the heat transport medium 20.

Thus, the plate-like heat exchange components 62 are provided parallel to the flow of the heat transport medium 20. This can reduce the pressure loss of the heat transport medium 20. Accordingly, the frequency of the magnetic refrigeration cycle can be increased.

However, the heat transport medium 20 fed into the container 51 flows at high speed in a portion having low flow resistance between the heat exchange components 62 and between the heat exchange component 62 and the inner wall of the container 51. Thus, if the frequency of the magnetic refrigeration cycle is increased, the heat exchange efficiency between the heat exchange component 62 and the heat transport medium 20 is decreased. This may decrease the refrigeration performance.

Furthermore, the magnetic refrigeration system based on the AMR technique is operated with a temperature gradient formed between both ends (high temperature end and low temperature end) of the heat exchanger. More specifically, a temperature gradient is formed by the heat storage effect of the heat exchange component including the magnetocaloric effect material. In the state in which the temperature gradient is formed, the operation is performed. Thus, heat generation at the high temperature end and heat absorption at the low temperature end are utilized. Accordingly, it is necessary to produce a large temperature difference between the high temperature end and the low temperature end and to stably maintain the temperature gradient formed between both ends. The temperature gradient formed can be stably maintained by decreasing the thermal conductivity between the portion of the heat exchange component 62 located on the high temperature end side and the portion of the heat exchange component 62 located on the low temperature end side.

However, in the plate-like heat exchange component 62, the portion located on the high temperature end side and the portion located on the low temperature end side are integrated. This results in high thermal conductivity. Next, returning to FIGS. 1A and 1B and FIGS. 3A to 3C, the heat exchanger according to the first embodiment is illustrated.
As shown in FIGS. 1A and 1B, the heat exchanger (ARM bed) 1 includes a container 11 to be fed with a heat transport medium 20, and heat exchange components 12.
The container 11 can be configured as a tube having a rectangular cross-sectional shape as viewed in the y direction. However, the cross-sectional shape as viewed in the y direction is not limited to a rectangle, but can be appropriately modified.
For instance, by using a cylindrical container having a circular cross-sectional shape as viewed in the y direction, the pressure in the container can be isotropically distributed. Furthermore, a cylindrical container is preferable also from the viewpoint of the heat exchange efficiency between the heat exchange component 12 in contact with the container inner wall and the heat transport medium 20. In the case of a tube having a rectangular cross-sectional shape, the heat exchange efficiency between the heat transport medium 20 and the heat exchange component 12 is made lower at the corners than at the tube center portion. However, a cylindrical container can improve this situation.
The heat exchange component 12 is configured to include a magnetocaloric effect material. Examples of the magnetocaloric effect material can include Gd (gadolinium), Gd compounds of Gd (gadolinium) mixed with some elements, intermetallic compounds made of some rare earth elements and transition metal elements, Ni₂MnGa alloys, GdGeSi compounds, LaFe₁₃-based compounds, and LaFe₁₃H. However, the magnetocaloric effect material is not limited to those illustrated. Any material developing the magnetocaloric effect can be appropriately selected.

The heat exchange components 12 are provided in a plurality with a prescribed spacing inside the container 11. The heat exchange components 12 are arranged parallel to each other inside the container 11. The longest side 12a of the heat exchange component 12 is directed parallel to the direction of the magnetic field (z direction). One side 12b in the plane perpendicular to the longest side 12a is directed parallel to the y direction.

As illustrated in FIG. 1A and FIGS. 3A to 3C, the plurality of heat exchange components 12 are provided along the flowing direction of the heat transport medium 20 so as not to overlap at least partly as viewed in the flowing direction (y direction) of the heat transport medium 20.
In this description, the flowing direction of the heat transport medium 20 refers to the streamline of the heat transport medium 20 in the container 11, and not to the feeding direction of the heat transport medium 20 into the container 11.
Here, the streamline is defined as follows. The y-direction center point is denoted by (Y0, x). The y-direction end points (the points in contact with the wall surface of the container 11) at the same x position as (Y0, x) are denoted by (Yr, x) and (Y-r, x). The trajectory of the point at which the distance to (Y0, x) and the distance to (Yr, x) are equal is denoted by line L1. The trajectory of the point at which the distance to (Y0, x) and the distance to (Y-r, x) are equal is denoted by line L2. Then, the streamline is defined as lines L1 and L2. For instance, in the case where the container 11 has a rectangular cross section as shown in FIGS. 1A and 1B, then L1 and L2 are parallel to the x-axis direction.
In this case, as illustrated in FIG. 1A and FIGS. 3A to 3C, the heat exchange components 12 can be arranged in a staggered lattice in the plane parallel to the xy plane. However, the embodiment is not limited to the arrangement in a staggered lattice. The arrangement pitch of the heat exchange components 12 may be made different for each column, or the arrangement pitch of the heat exchange components 12 may be changed in one column.

Furthermore, as shown in FIGS. 1A and 3B, the heat exchange components 12 can be arranged so that the dimension d between the heat exchange components 12 in the x direction is related to the dimension a of the heat exchange component 12 in the same direction as d≤a.
Furthermore, a plurality of columns having such a dimensional relation can be arranged in the y direction with a gap between the columns.
Furthermore, the columns adjacent in the y direction can be configured so that the heat exchange components 12 in the respective columns have a complementary relation to the region 12c between the heat exchange components 12. More specifically, as viewed in the y direction, the region 12c between the heat exchange components 12 located in the forward column can be obstructed by a heat exchange component 12 located in the backward column. Furthermore, as viewed in the y direction, the region 12c between the heat exchange components 12 located in the backward column can be obstructed by a heat exchange component 12 located in the forward column.

That is, the region 12c between the heat exchange components 12 provided on the front side in the flowing direction of the heat transport medium 20 is obstructed by a heat exchange component 12 provided on the back side in the flowing direction of the heat transport medium 20.

In this description, being parallel includes not only being completely parallel, but also an error range in which the function and effect described later can be substantially achieved. Furthermore, being perpendicular includes not only being completely perpendicular, but also an error range in which the function and effect described later can be substantially achieved.

The arrangement configuration of the heat exchange components 12 as described above can form many turbulent portions when the heat transport medium 20 flows inside the container 11. This can increase the heat transport medium 20 contributing to heat exchange near the heat exchange components 12. As a result, the heat exchange efficiency between the heat exchange component 12 and the heat transport medium 20 can be improved. The details on the turbulent state occurring in the flow of the heat transport medium 20 will be described later.
The heat exchange components 12 are arranged parallel to the y direction. This can suppress the pressure loss of the heat transport medium 20 during the operation of the magnetic refrigeration system.
The longest side 12a of the heat exchange component 12 is directed parallel to the direction of the magnetic field (z direction). This can suppress the influence of the demagnetizing field when a magnetic field is applied to the heat exchange component 12. Thus, the effective magnetic field can be enhanced. Accordingly, a magnetic refrigeration system with high refrigeration performance can be provided.
In this case, in order to enhance the effective magnetic field, a higher aspect ratio of the heat exchange component 12 is more favorable. For instance, in the case where the heat exchange component 12 is shaped like a strip, the ratio of the shortest side to the longest side (the side in the z direction) can be set to 1:4 or more, and more preferably 1:7 or more.

Next, the cross-sectional shape in the plane parallel to the xy plane of the heat exchange component is illustrated. FIGS. 4A to 4E are schematic sectional views for illustrating the cross-sectional shape in the plane parallel to the xy plane of the heat exchange component.
The cross-sectional shape in the plane parallel to the xy plane of the heat exchange component 12 illustrated in FIG. 1A and FIGS. 3A to 3C is a rectangle, but is not limited thereto.

For instance, as illustrated in FIG. 4A, the cross-sectional shape in the plane parallel to the xy plane of a heat exchange component 22 can be a square.
Furthermore, as illustrated in FIG. 4B, the cross-sectional shape in the plane parallel to the xy plane of a heat exchange component 23 can be a triangle. In this case, in view of possible change in the flowing direction of the heat transport medium 20 during the operation of the magnetic refrigeration system, the orientations of the heat exchange component 23a and the heat exchange component 23b can be made different. For instance, as illustrated in FIG. 4B, the heat exchange component 23a can be arranged so that its vertex is directed to the direction opposite to the y direction, and the heat exchange component 23b can be arranged so that its vertex is directed to the y direction.

Furthermore, as illustrated in FIG. 4C, the cross-sectional shape in the plane parallel to the xy plane of a heat exchange component 24 can be a hexagon.
Furthermore, as illustrated in FIG. 4D, the cross-sectional shape in the plane parallel to the xy plane of a heat exchange component 25 can be a circle.
The cross-sectional shape in the plane parallel to the xy plane of the heat exchange component is not limited to those illustrated, but can be appropriately modified. For instance, other polygons such as pentagon can also be used, and an ellipse and the like can also be used. Furthermore, for instance, a shape formed from an arbitrary curve, or a shape formed from an arbitrary curve and an arbitrary straight line can also be used.

In this case, in the case of having a quadrangular cross-sectional shape like the heat exchange components 12, 22, the pressure loss of the heat transport medium 20 can be suppressed at a low level. Furthermore, many turbulent portions can be formed when the heat transport medium 20 flows inside the container 11. This can increase the heat transport medium 20 contributing to heat exchange near the heat exchange components 12, 22. As a result, the heat exchange efficiency between the heat exchange component 12, 22 and the heat transport medium 20 can be improved.

Furthermore, the shape processing of the heat exchange component 12, 22 is simplified. This enables manufacturing of the heat exchange component 12, 22 with high accuracy. Furthermore, the workability of arranging the heat exchange components 12, 22 inside the container 11 can be improved.

Furthermore, a cross-sectional shape having a smoother outline, such as a hexagonal cross-sectional shape like the heat exchange component 24 and a circular cross-sectional shape like the heat exchange component 25, can suppress the pressure loss of the heat transport medium 20 at a lower level. For instance, a cross-sectional shape having a smoother outline can be selected for a heat transport medium 20 having a higher viscosity.

Furthermore, as described later, a stable turbulent state can be formed between the heat exchange components. This can increase the heat transport medium 20 contributing to heat exchange near the heat exchange components. Furthermore, heat exchange components having a smooth cross-sectional shape with an angle of 90 degrees or more or a rounded outline can smooth the flow line of the heat transport medium 20. This can suppress the dead volume (the volume of the heat transport medium 20 contributing less to heat exchange) at a lower level. As a result, the heat exchange efficiency between the heat exchange component and the heat transport medium 20 can be improved.

Furthermore, it is also possible to arrange heat exchange components different in cross-sectional shape, cross-sectional area, and arrangement pitch.
For instance, as illustrated in FIG. 4E, heat exchange components 12 and heat exchange components 22 different in cross-sectional shape, cross-sectional area, and arrangement pitch can be arranged.
In this case, the arrangement pitch of the heat exchange components 22 provided on the inflow side of the heat transport medium 20 in the container 11 can be made smaller than the arrangement pitch of the heat exchange components 12. Then, the pressure loss in the region provided with the heat exchange components 22 can be made higher than the pressure loss in the region provided with the heat exchange components 12. This can rectify the flow of the heat transport medium 20, which is made uneven upon flowing from the piping into the container 11. After the inflow, the pressure loss can be reduced by the heat exchange components 12 having a larger arrangement pitch. In this case, in view of possible change in the flowing direction of the heat transport medium 20 during the operation of the magnetic refrigeration system, the heat exchange components 22 having a small arrangement pitch can be provided on both end sides of the container 11.

The shape, dimension, arrangement configuration (such as arrangement pitch and position), number and the like of the heat exchange components can be appropriately modified depending on e.g. the viscosity of the heat transport medium 20 and the operating temperature of the magnetic refrigeration system.

Next, the turbulent state occurring in the flow of the heat transport medium 20 is further illustrated.
FIGS. 5A and 5B are schematic views for illustrating the turbulent state occurring in the flow of the heat transport medium 20.
FIG. 5A shows the case where the heat exchange components 25 having a circular cross-sectional shape are arranged in a regular lattice. FIG. 5B shows the case where the heat exchange components 25 having a circular cross-sectional shape are arranged in a staggered lattice.

It is assumed that the heat transport medium 20 flows at the same flow rate in a space of the same volume. The flow velocity distribution is shown with monotone shading. In the region 201, the flow velocity v is faster than a threshold vc. The region 201 is represented by a dark shade. In the region 202, the flow velocity v is slower than the threshold vc. The region 202 is represented by a light shade.

In FIG. 5A, the heat exchange components 25 are arranged in a regular lattice. In this case, the regions 201 having a fast flow velocity are aligned in the direction parallel to the y direction to form a region having a fast flow velocity continuing from the feed to the ejection of the heat transport medium 20. That is, it is found that the heat transport medium 20 flows selectively and rapidly in the portion having a low channel resistance.

On the other hand, in FIG. 5B, the heat exchange components 25 are arranged in a staggered lattice. In this case, the region having a fast flow velocity continuing from the feed to the ejection of the heat transport medium 20 is not formed. The regions 202 having a relatively slow flow velocity predominate.
Furthermore, as shown in FIG. 5B, turbulence is observed at many sites 203.

More specifically, in the case where the heat exchange components 25 are arranged in a regular lattice, the heat transport medium 20 flows selectively and rapidly in the portion having a low channel resistance. Furthermore, many portions 27 constitute a dead volume (the volume of the heat transport medium 20 contributing less to heat exchange). This decreases the heat exchange efficiency between the heat exchange component 25 and the heat transport medium 20.
In contrast, in the case where the heat exchange components 25 are arranged in a staggered lattice, the flow velocity can be made generally slower than in the case where the heat exchange components 25 are arranged in a regular lattice. Furthermore, turbulence can be caused at many sites 203 between the heat exchange components 25. This turbulence occurs in a large region between the adjacent heat exchange components 25. Thus, the portions 27 constituting a dead volume can be reduced. This also facilitates heat exchange between the heat exchange components 25. As a result, the effective heat exchange efficiency can be increased.

As shown in FIG. 5A, in the case where the heat exchange components 25 are arranged in a regular lattice, the turbulence only forms a small vortex slightly at the end portion of the heat exchange components 25. It is found that this does not contribute to heat exchange between the adjacent heat exchange components 25.

Next, the relationship between the arrangement configuration of the heat exchange components and the amount of heat exchange is illustrated.
FIGS. 6A and 6B are schematic views for illustrating the arrangement configuration of the heat exchange components. Here, FIG. 6A is a schematic view for illustrating an example (practical example 1) of the arrangement configuration of the heat exchange components according to this embodiment. FIG. 6B is a schematic view for illustrating an arrangement configuration of the heat exchange components according to comparative example 1.

As shown in FIG. 6A, in the arrangement configuration of the heat exchange components according to practical example 1, the heat exchange components 22 were periodically arrayed in a staggered lattice. The heat exchange components 22 were arranged parallel to the y direction and parallel to each other. The dimension d1 between the heat exchange components 22 in the x direction, the dimension d2 between the heat exchange components 22 in the y direction, and the dimension a1 of the heat exchange component 22 were set so that d1 = 0.7×a1 and d2 = 0.5×a1. Then, the adjacent columns were displaced by half phase in the x direction so that the heat exchange components 22 were periodically arrayed in a staggered lattice.

As shown in FIG. 6B, in the arrangement configuration of the heat exchange components according to comparative example 1, the heat exchange components 22 were periodically arrayed in a regular lattice. The heat exchange components 22 were arranged parallel to the y direction and parallel to each other. The dimension d1 between the heat exchange components 22 in the x direction, the dimension d2 between the heat exchange components 22 in the y direction, and the dimension a1 of the heat exchange component 22 were set so that d1 = 0.7×a1 and d2 = 0.5×a1.

Then, it was assumed that the heat transport medium 20 was fed to fill the space other than the heat exchange components 22 and caused to flow therein. In this assumption, the amount of heat exchange between the heat exchange component 22 and the heat transport medium 20 was determined by simulation.
In this case, it was assumed that the heat transport medium 20 was water, the ambient temperature was 25°C, the frequency of the magnetic refrigeration cycle was 1 Hz, and the flow distance of the heat transport medium 20 was 10×a1. Then, the amount of heat exchange between the heat exchange component 22 and the heat transport medium 20 per unit time was calculated.

The amount of heat exchange was calculated under the assumption that the periodic structure illustrated in FIGS. 6A and 6B were infinitely repeated. In this case, in those illustrated in FIGS. 6A and 6B, the volume of the heat exchange components 22 in the same capacity is equal.

Furthermore, as practical example 2, the dimensional relation in practical example 1 was changed to d1 = 0.8×a1 and d2 = 0.2×a1.
As comparative example 2, the dimensional relation in comparative example 1 was changed to d1 = 0.8×a1 and d2 = 0.2×a1.
The other conditions in practical example 2 and comparative example 2 were made the same as those in practical example 1 and comparative example 1.

FIGS. 7A and 7B are graphs for illustrating the comparison between the amount of heat exchange of the practical example and the amount of heat exchange of the comparative example. Here, FIG. 7A is a graph for illustrating the comparison between the amount of heat exchange of practical example 1 and the amount of heat exchange of comparative example 1. FIG. 7B is a graph for illustrating the comparison between the amount of heat exchange of practical example 2 and the amount of heat exchange of comparative example 2.

As seen from FIG. 7A, in practical example 1, the amount of heat exchange can be made larger than in comparative example 1.
As seen from FIG. 7B, in practical example 2, the amount of heat exchange can be made larger by 20% or more than in comparative example 2.

Thus, even in the case of heat exchange components having an equal volume in the same capacity and also placed with an equal spacing between the heat exchange components, it was confirmed that the amount of heat exchange between the heat exchange component and water can be made larger for a periodic array in a staggered lattice than for a periodic array in a regular lattice.

That is, a plurality of heat exchange components are regularly arrayed in the container. Furthermore, the heat transport medium 20 such as water is fed to fill the container. While causing the heat transport medium 20 to flow therein, heat exchange is performed between the heat exchange component and the heat transport medium 20. In this case, the arrangement configuration of the heat exchange components according to this embodiment can increase the amount of heat exchange.

Next, methods for arranging the heat exchange components are illustrated.
As illustrated in FIG. 1B, the heat exchange components can be fixed at the end portion in the z direction.
In this case, a group of heat exchange components can be formed outside the container 11 and placed inside the container 11. This can improve the productivity.

FIGS. 8A to 8D are schematic views for illustrating a method for arranging the heat exchange components.
As shown in FIG. 8A, a group of heat exchange components 22a with one end portion in the z direction fixed, and a group of heat exchange components 22b with the other end portion in the z direction fixed, can be formed and alternately placed inside the container 11. Here, FIGS. 8A to 8D show the case of forming the groups of heat exchange components along the y direction.
For instance, groups of heat exchange components 22a, 22b as illustrated in FIGS. 8B, 8C, and 8D can be formed and alternately placed inside the container 11.

FIGS. 9A to 9D are also schematic views for illustrating a method for arranging the heat exchange components.
As shown in FIG. 9A, a group of heat exchange components 22a with one end portion in the z direction fixed, and a group of heat exchange components 22b with the other end portion in the z direction fixed, can be formed and alternately placed inside the container 11. Here, FIGS. 9A to 9D show the case of forming the groups of heat exchange components along the x direction.
For instance, groups of heat exchange components 22a, 22b as illustrated in FIGS. 9B, 9C, and 9D can be formed and alternately placed inside the container 11.

FIGS. 10A and 10B are also schematic views for illustrating a method for arranging the heat exchange components.
As shown in FIG. 10A, a group of heat exchange components 22a, 22b with one end portion in the z direction fixed can be formed and placed inside the container 11.

For instance, a group of heat exchange components 22a, 22b as illustrated in FIG. 10B can be formed and placed inside the container 11.

The heat exchange components according to the above embodiment are integrated in the z direction. However, the heat exchange components can also be divided in the z direction.

The foregoing relates to the case of arranging heat exchange components formed from the same magnetocaloric effect material. However, the embodiment is not limited thereto.
The characteristics of the magnetocaloric effect material are maximized near the Curie temperature Tc. In the temperature region too distant from the Curie temperature Tc, the characteristics may be significantly degraded, or the magnetocaloric effect may fail to be developed.

As described above, the magnetic refrigeration system based on the AMR technique is operated with a temperature gradient formed between both ends (high temperature end and low temperature end) of the heat exchanger. Thus, arranging heat exchange components formed from the same magnetocaloric effect material may partly produce a portion with degraded characteristics.

FIGS. 11A and 11B are schematic sectional views for illustrating cases of arranging heat exchange components formed from different magnetocaloric effect materials.
FIG. 11A shows the case of arranging groups of heat exchange components formed from different magnetocaloric effect materials along the y direction. More specifically, the heat exchange components are formed from a different magnetocaloric effect material for each region provided along the flowing direction of the heat transport medium 20.
For instance, FIG. 11A shows the case of selecting magnetocaloric effect materials having Curie temperatures Tc suited to the temperature gradient, and providing groups of heat exchange components formed from the selected magnetocaloric effect materials.
For instance, in FIG. 11A, the inflow side of the heat transport medium 20 is the low temperature end, and the outflow side is the high temperature end. Then, a magnetocaloric effect material having the Curie temperature Tca suited to the temperature of the low temperature end is selected, and heat exchange components 32a are formed from the selected magnetocaloric effect material. A magnetocaloric effect material having the Curie temperature Tcc suited to the temperature of the high temperature end is selected, and heat exchange components 32c are formed from the selected magnetocaloric effect material. For the region between the low temperature end and the high temperature end, a magnetocaloric effect material having the Curie temperature Tcb suited to the temperature of that region is selected, and heat exchange components 32b are formed from the selected magnetocaloric effect material.
This can suppress partial characteristics degradation, and thus can improve the heat exchange efficiency.

The number of regions provided with the groups of heat exchange components is not limited to those illustrated, but can be appropriately modified.

FIG. 11B shows the case of arranging heat exchange components formed from magnetocaloric effect materials having different Curie temperatures Tc in a mixed manner.
This can expand the operating temperature region of the magnetic refrigeration system.
Here, for instance, also in the case of forming groups of heat exchange components as illustrated in FIGS. 10A to 11B, it is preferable to provide a magnetic field generating section so that the application direction of the magnetic field is directed in the z direction (parallel to the longest side of each heat exchange component).

### [Second embodiment]

FIG. 12 is a schematic configuration view for illustrating a magnetic refrigeration system according to a second embodiment.
FIG. 13 is a schematic line diagram of the magnetic refrigeration system according to the second embodiment.
Here, FIGS. 12 and 13 illustrate, as an example, the case where a heat transport medium 20 subjected to heat absorption in a heat exchange section 1 is sent to a low temperature side heat exchange section 125 and caused to perform heat exchange with a heat exchange target, not shown, in the low temperature side heat exchange section 125.

As shown in FIGS. 12 and 13, the magnetic refrigeration system 100 includes heat exchangers 1, a feed piping 103, an ejection piping 104, a magnetic field generating section 105a, a magnetic field generating section 105b, a rotary board 106a, a rotary board 106b, a low temperature side heat exchange section 125, and a heat dissipating section 126.

As shown in FIG. 12, a pair of rotary boards 106a, 106b are provided so as to sandwich two heat exchange sections 1 therebetween. The rotary boards 106a, 106b are supported by a common shaft 107. This shaft 107 is located at the center of the two heat exchange sections 1. The magnetic field generating sections 105a, 105b are held inside the neighborhood of the periphery of the rotary boards 106a, 106b, respectively. The magnetic field generating sections 105a, 105b are opposed to each other, and coupled via a yoke (not shown) to each other. Thus, a magnetic field space is formed in the gap between the magnetic field generating sections 105a, 105b paired with each other.
The magnetic field generating section 105a, 105b can be e.g. a permanent magnet. The permanent magnet can be e.g. a NdFeB (neodymium-iron-boron) magnet, SmCo (samarium-cobalt) magnet, or ferrite magnet. Each time the rotary boards 106a, 106b are rotated 90 degrees, the magnetic field generating section 105a, 105b repeat approach and separation with respect to the heat exchange sections 1. In the state in which a pair of magnetic field generating sections 105a, 105b come closest to the respective heat exchange sections 1, the heat exchange section 1 is located in the magnetic field space formed between the magnetic field generating sections 105a, 105b. Thus, a magnetic field is applied to the heat exchange component provided inside the container 11. When the state of the magnetic field being applied to the heat exchange component is switched to the state of the magnetic field being removed, the entropy of the electron magnetic spin system increases. This causes migration of entropy between the lattice system and the electron magnetic spin system. Accordingly, the temperature of the heat exchange component decreases. This is transferred to the heat transport medium 20 and decreases the temperature of the heat transport medium 20. The heat transport medium 20 with the temperature thus decreased is ejected from the heat exchange section 1 through the ejection piping 104 and supplied as a coolant to the low temperature side heat exchange section 125.

The heat transport medium 20 can be e.g. a gas such as air and nitrogen gas, water, an oil-based medium such as mineral oil and silicone, or a solvent-based medium such as alcohols (e.g., ethylene glycol).
In this case, water has the highest specific heat and is inexpensive. However, water may freeze in the temperature region of 0°C or less. Thus, it is possible to use e.g. an oil-based medium, a solvent-based medium, a mixed liquid of water and an oil-based medium, or a mixed liquid of water and a solvent-based medium. Depending on the operating temperature region of the magnetic refrigeration system 100, the liquid can be appropriately modified in kind and mixing ratio.

In the case illustrated in FIG. 12, the magnetic field generating sections 105a, 105b, the rotary boards 106a, 106b, the shaft 107 and the like constitute a magnetic field changing section for changing the magnetic field to the heat exchanger 1.

In the case illustrated in FIG. 12, mechanical variation is applied to the magnetic field generating section 105a, 105b side. However, mechanical variation may be applied to the heat exchanger 1 side.
In the foregoing, as the magnetic field generating section 105a, 105b, a permanent magnet is illustrated. However, for instance, an electromagnet can also be used as the magnetic field generating section 105a, 105b. In the case of using an electromagnet as the magnetic field generating section 105a, 105b, means for applying mechanical variation can be connected to the magnetic field generating section 105a, 105b. However, alternatively, it is also possible to provide e.g. a switch for switching between energization and deenergization of the electromagnet.

On the upstream side of the feed piping 103, a tank 121 storing the heat transport medium 20 is provided. In the midstream of the feed piping 103, a transport section 122 is provided. The transport section 122 feeds the heat exchange section 1 with the heat transport medium 20. The ejection piping 104 is divided into two lines after exiting the heat exchange section 1 to constitute two circulation lines. In the midstream of one circulation line (cooling line 123), a valve 131, the low temperature side heat exchange section 125, and a valve 133 are provided. The tail end of the cooling line 123 is connected to the tank 121. In the midstream of the other circulation line (precooling line 124), a valve 132, the heat dissipating section 126, and a valve 134 are provided. The tail end of the precooling line 124 is connected to the tank 121.
Furthermore, a control section, not shown, for controlling e.g. the operation of the rotary boards 106a, 106b and the opening/closing operation of the valves 131-134 is provided.

Next, the operation of the magnetic refrigeration system 100 is illustrated.
The magnetic refrigeration system 100 is operated by alternately repeating a precooling step and a cooling step.

First, in the precooling step, with the valve 131 and the valve 133 closed, the valves 132 and 134 are opened to circulate the heat transport medium 20 in the precooling line 124. In this state, the magnetic field generating sections 105a, 105b are made close to the heat exchange sections 1. When a magnetic field is applied to the heat exchange components provided inside the container 11, the temperature of the heat exchange components increases. This is transferred to the heat transport medium 20 and increases the temperature of the heat transport medium 20. The heat transport medium 20 thus warmed is ejected from the heat exchange section 1 through the ejection piping 104 and fed through the valve 132 into the heat dissipating section 126, where it is cooled. The cooled heat transport medium 20 returns into the tank 121 through the valve 134.

When the temperature of the heat exchange components provided inside the container 11 has decreased close to the temperature of the heat transport medium 20 supplied through the feed piping 103 to the heat exchange sections 1, the valves 132, 134 are closed. Thus, the precooling step is terminated and passed to the cooling step.

In the cooling step, first, the magnetic field generating sections 105a, 105b are distanced from the heat exchange sections 1. Next, the valve 131 and the valve 133 are opened to circulate the heat transport medium 20 in the cooling line 123. When the magnetic field is removed from the heat exchange components, the temperature of the heat exchange components decreases. This is transferred to the heat transport medium 20 and decreases the temperature of the heat transport medium 20. The heat transport medium 20 thus cooled is ejected from the heat exchange section 1 through the ejection piping 104 and fed through the valve 131 into the low temperature side heat exchange section 125. In the low temperature side heat exchange section 125, heat exchange is performed between the heat transport medium 20 subjected to heat absorption in the heat exchanger 1 and a heat exchange target, not shown. The low temperature side heat exchange section 125 can be e.g. a section for cooling air by performing heat exchange between the heat transport medium 20 at low temperature and air.
The heat transport medium 20 is subjected to heat exchange in the low temperature side heat exchange section 125, and its temperature is increased. Then, the heat transport medium 20 returns into the tank 121 through the valve 133.

When the temperature of the heat exchange components provided inside the container 11 has increased close to the temperature of the heat transport medium 20 supplied through the feed piping 103 to the heat exchange sections 1, the valves 131, 133 are closed. Thus, the cooling step is terminated and passed again to the precooling step.

In this case, the control section, not shown, controls e.g. the operation of the rotary boards 106a, 106b and the opening/closing operation of the valves 131-134, and alternately repeats the precooling step and the cooling step described above.

In the foregoing, as an example, the magnetic refrigeration system using the heat absorption effect in the heat exchange sections 1 is illustrated. However, the embodiment is not limited thereto. For instance, the magnetic refrigeration system can also be configured to use the heat generation effect in the heat exchange sections 1. Alternatively, the magnetic refrigeration system can also be configured to use the heat absorption effect and the heat generation effect in the heat exchange sections 1. For instance, the heat dissipating section 126 provided in the magnetic refrigeration system 100 can be used as a high temperature side heat exchange section to perform heat exchange between the heat transport medium 20 at high temperature and air. Thus, in this example, air can be heated.
The heat transport medium 20 transports cool heat or warm heat to the low temperature side heat exchange section or the high temperature side heat exchange section. The heat transport from the low temperature side heat exchange section or the high temperature side heat exchange section to the cooled section or the heat dissipating section is preferably performed by a gas such as air, helium, and carbon dioxide.

The embodiments described above can realize a heat exchanger and a magnetic refrigeration system capable of improving the heat transport efficiency.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Moreover, above-mentioned embodiments can be combined mutually and can be carried out.

For instance, the shape, dimension, material, layout, number and the like of various components in the heat exchanger 1, the magnetic refrigeration system 100 and the like are not limited to those illustrated above, but can be appropriately modified.

### [Reference Signs List]

1 heat exchanger
11 container
12 heat exchange component
12c region
20 heat transport medium
22 heat exchange component
23 heat exchange component
24 heat exchange component
25 heat exchange component
32a - 32e heat exchange component
100 magnetic refrigeration system
105a, 105b magnetic field generating section
106a, 106b rotary board
122 transport section
125 low temperature side heat exchange section

## Claims

1. A heat exchanger comprising:
a container to be fed with a heat transport medium; and
a plurality of heat exchange components provided with a prescribed spacing inside the container,
the plurality of heat exchange components being provided along a flowing direction of the heat transport medium so as not to overlap at least partly as viewed in the flowing direction of the heat transport medium.

2. The heat exchanger according to claim 1, wherein a region between the heat exchange components provided on a front side in the flowing direction of the heat transport medium is obstructed by the heat exchange component provided on a back side in the flowing direction of the heat transport medium.

3. The heat exchanger according to claim 1, wherein one of the plurality of heat exchange components is formed from the magnetocaloric effect material different from that of another of the plurality of heat exchange components.

4. The heat exchanger according to claim 1, wherein the plurality of heat exchange components are formed from the magnetocaloric effect material different from each other for each region provided along the flowing direction of the heat transport medium.

5. A magnetic refrigeration system comprising:
the heat exchanger according to claim 1;
a magnetic field changing section configured to change a magnetic field to the heat exchange section; and
a heat transport section configured to feed the heat exchange section with the heat transport medium.
